(19) Europäisches Patentamt
European Patent Office
Office européen des brevets

(11) **EP 2 136 604 B1**

(12) **EUROPÄISCHE PATENTSCHRIFT**

(45) Veröffentlichungstag und Bekanntmachung des Hinweises auf die Patenterteilung:
**20.04.2011 Patentblatt 2011/16**

(51) Int Cl.:
*H05B 6/68* (2006.01)　　*H05B 1/02* (2006.01)

(21) Anmeldenummer: **08290589.4**

(22) Anmeldetag: **20.06.2008**

(54) **Verfahren zur Einstellung der Mikrowellenleistung in einem Mikrowellen-Gargerät in Abhängigkeit der gemessenen Kerntemperatur und Gargerät hierzu**

Method for adjusting microwave output in a microwave cooking device depending on the measured core temperature and cooking device

Procédé de réglage de la puissance des micro-ondes dans un appareil de cuisson à micro-ondes en fonction de la température mesurée au coeur et appareil de cuisson

(84) Benannte Vertragsstaaten:
**DE IT**

(43) Veröffentlichungstag der Anmeldung:
**23.12.2009 Patentblatt 2009/52**

(73) Patentinhaber: **Topinox Sarl**
**68270 Wittenheim (FR)**

(72) Erfinder:
• **Die Erfinder haben auf ihre Nennung verzichtet.**

(74) Vertreter: **Weber-Bruls, Dorothée et al**
**Jones Day**
**Hochhaus am Park**
**Grüneburgweg 102**
**60323 Frankfurt am Main (DE)**

(56) Entgegenhaltungen:
| | |
|---|---|
| **EP-A- 0 169 000** | **EP-A- 0 609 762** |
| **WO-A-02/47522** | **WO-A-2006/045290** |
| **WO-A-2008/067805** | **DE-A1- 4 217 943** |
| **FR-A- 2 621 106** | **JP-A- 2002 349 868** |

EP 2 136 604 B1

**Beschreibung**

Die vorliegende Erfindung betrifft ein Verfahren zur Einstellung einer in einem Garraum eines Gargerätes während eines Garprozesses zum Garen eines Gargutes abgegebenen Mikrowellenleistung in Abhängigkeit von zumindest einer erfassten Kerntemperatur

In modernen Gargeräten, insbesondere für die Großküche, wird mittlerweile Gargut immer häufiger mittels Mikrowellenstrahlung, gegebenenfalls in Kombination mit trockener Hitze und/oder Dampf gegart. Ein großer Vorteil der Verwendung von Mikrowellenstrahlung sind stark verkürzte Garzeiten, die durch die direkte Absorption von Mikrowellenstrahlung im Gargut und durch die Bereitstellung von leistungsstarken Mikrowellenquellen ermöglicht wird.

Zur Steuerung eines Garprozesses ist es aus dem Stand der Technik bekannt, die Oberflächentemperatur und die Kerntemperatur eines Garguts mittels einer Anordnung von Temperatursensoren zu erfassen und in Abhängigkeit der erfassten Temperaturwerte die Leistung der Mikrowellenstrahlung, mit dem das zu erwärmende Gargut beaufschlagt wird, einzustellen. Die Kerntemperatur eines Garguts ist dabei dem kältesten Punkt in dem Gargut zuzuordnen, der sich üblicherweise im Schwerpunkt bzw. im geometrischen Zentrum des Garguts, beispielsweise einer Kartoffel oder eines Bratens, befindet.

So offenbart die gattungsbildende DE 31 19 496 A1 ein Speisenthermometer für einen Einsatz in Mikrowellen-Gargeräten. Das Speisenthermometer umfasst einen spießartigen Stab, der vor Beginn eines Garprozesses in ein Gargut eingesteckt wird. Über die Länge dieses Stabs verteilt ist eine Vielzahl von Temperatursensoren angeordnet, die zur Erfassung der räumlichen Temperaturverteilung im Gargut dienen. In Abhängigkeit der gemessenen Temperaturverteilung, insbesondere der Oberflächentemperatur und der Kerntemperatur, soll die Leistung der Mikrowellenstrahlung so eingestellt werden, dass sich eine möglichst konstante Temperaturverteilung innerhalb des Garguts einstellt, um beispielsweise ein Austrocknen der Gargutoberfläche während des Garprozesses zu vermeiden.

Auch aus der EP 0 746 180 A2 ist ein Mikrowellen-Gargerät bekannt, bei dem die Einstellung der Mikrowellen-Leistung über eine gemessene Oberflächentemperatur und Kerntemperatur eines zu erwärmenden Garguts erfolgt. Dabei soll der Garprozeß derart geführt werden, dass die Temperatur-Differenz zwischen der Oberflächentemperatur und der Kerntemperatur minimiert wird.

Überdies offenbart die EP 0 838 637 A1 ein Mikrowellen-Gargerät, in welchem anhand einer Messung der Temperatur der Garraumatmosphäre auf die Temperaturverteilung im Gargut geschlossen wird.

Der Stand der Technik zu Mikrowellen-Gargeräten weist den Nachteil auf, dass nur zur Vermeidung eines Austrocknens von Randschichten eines Garguts eine Einstellung einer Mikrowellenleistung unter Berücksichtigung einer Temperaturverteilung in dem Gargut erfolgt.

Zudem ist es bekannt, dass der Garegrad eines Gargutes durch seine Kerntemperatur, also die niedrigste Temperatur im Gargut, und/oder seinen C-Wert, also den Kochwert, bestimmt wird. Der C-Wert berechnet sich dabei wie folgt:

$$ C_{BT}^{UF} = \int_{t_1}^{t_2} UF^{\frac{[KT(t) - BT]}{10}} \, dt \quad , $$

wobei
UF = Umrechnungsfaktor,
BT = Bezugstemperatur = 100°C,
KT(t) = Kerntemperaturverlauf,
$t_1$ = Zeitpunkt, bei dem eine Starttemperatur überschritten wurde, abhängig vom Gargut und
$t_2$ = Ist-Zeit.

Dabei ist es auch bekannt, dass Kartoffeln, auch wenn sie in siedendem Wasser eine Kerntemperatur von nahezu 100° C erreicht haben, noch nicht die zum Verzehr gewünschte Konsistenz erreicht haben müssen, da es nämlich erforderlich ist, dass die Kerntemperatur für circa 3 bis 5 Minuten in der Kartoffel erhalten bleiben muss. Die chemischen Reaktionen, bei denen die Bestandteile von Lebensmitteln umgesetzt werden, erfordert nämlich neben der Temperatur auch eine gewisse Zeitspanne. Je nach Lebensmittel führt man daher einen Garprozess entweder in Abhängigkeit einer erfassten Kerntemperatur oder eines bestimmten C-Wertes.

Die DE 42 17 943 A1 offenbart einen Mikrowellenofen mit einer Temperatursonde zur Erfassung einer Temperatur eines zu garenden Guts und einer Steuer- und Überwachungsschaltung zur Steuerung einer Heizenergie und zur Abschaltung der Heizenergie bei Erreichen einer von einem Benutzer eingestellten Endkerntemperatur. Eine Rechnerschaltung besitzt Mittel zur Bestimmung eines Zeitintervalls, welches notwendig ist, um ein bestimmtes Kerntemperaturintervall zu durchlaufen. Die gemessenen Wertepaare werden mit in einem Speicher abgespeicherten Werten verglichen. Anhand dieses Vergleichs wird die Restgardauer bestimmt. Die Restgardauer wird angezeigt.

Die WO 2006/045290 A1 offenbart ein Gargerät mit einem Garraum, mindestens einer Messeinrichtung, insbesondere in Form eines Kerntemperaturfühlers, zum Aufnehmen einer ersten und/oder zweiten Garzustandsgröße von mindestens einem Gargut, einer Heizeinrichtung, und einer Steuereinrichtung zum selbsttätigen Führen eines Garprozesses, welche als Eingangssignal ein Ausgangssignal der Messeinrichtung empfängt. Die erste Garzustandsgröße stellt vorzugsweise die Kerntemperatur eines Garguts dar. Das Gargerät kann für eine Beeinflussung von Einstellgrößen eine Einrichtung zum Abspeichern der von der Steuereinrichtung vorgegebene Werte für Einstellgrößen zusammen mit den zugehörigen Messwerten einer Garzustandsgröße und/oder einer oder mehrerer ihrer Ableitungen nach der Zeit in der Weise aufweisen, dass die Steuereinrichtung auf der Grundlage der so abgespeicherten Daten eines früheren Garprozesses sowie der von einem oder mehreren Messwertaufnehmern in einem aktuellen Garprozess aufgenommenen Messwerte die Abfolge von Werten der Einstellgröße des früheren Prozesses reproduzieren kann.

Aus der EP 0 609 762 A1 ist ein Gargerät mit einer Bräunungseinrichtung und eine Einrichtung zum Generieren von Mikrowellenenergie bekannt. Eine Speichereinrichtung enthält Werte i, die mit Heizsequenzen übereinstimmen; Kodenummern $\alpha_i$, die für einen gewissen Wert i jeweils mit Gargut einer bestimmten Art übereinstimmen; und eine Tabelle mit Werten die mit Steigungswerten von Garguterwärmungsoptimierungskurven, die vorab als Funktion der Werte i festgelegt sind. übereinstimmen, und die die Erwärmungszeit des Gargeräts als Funktion eines Gargutgewichts repräsentieren.

Aus der WO 02/47522 A2 ist ein Verfahren zum Führen eines Garprozesses bekannt. Das Verfahren umfasst ein Ermitteln von Temperaturverläufen einer Oberflächentemperatur eines Garguts über einen Garprozeßfühler und einer Kerntemperatur das Garguts über den Garprozeßfühler und /oder einer Garraumtemperatur. Das Verfahren umfasst das Erfassen einer Fehlstechung des Garprozeßfühers in einer Vorheizphase, wenn die ersten Ableitungen der Oberflächentemperatur als auch der Kerntemperatur nach der Zeit eine Steigung aufweisen und die Differenz zwischen der Kerntemperatur und der Oberflächentemperatur zu einem ersten Zeitpunkt nach Beginn des Vorheizprozesses kleiner einem ersten Schwellenwert ist, oder wenn die Ableitungen der Oberflächentemperatur und der Kerntemperatur nach der Zeit gleiche Steigungen aufweisen.

Die JP 2002 349 868 A offenbart ein Mikrowellengargerät mit einem Infrarotsensor, der eine Oberflächentemperatur eines zu erwärmenden Guts erfasst und einen Temperaturgradient berechnet. Der Betrieb der Mikrowelle wird gestoppt, wenn, aufgrund eines verringerten Anstiegs der Temperatur, detektiert wird, dass Dampf generiert wird.

Es ist die Aufgabe der vorliegenden Erfindung, das gattungsgemäße Verfahren derart weiterzuentwickeln, dass die Nachteile des Stands der Technik überwunden werden. Insbesondere soll die Mikrowellenleistung während eines Garprozesses so eingestellt werden, dass ein möglichst schnelles Garen mit gleichzeitig möglichst geringem Energieverbrauch erreicht wird.

Diese Aufgabe wird erfindungsgemäß durch die kennzeichnenden Merkmale des Anspruchs 1 gelöst:

Dabei kann vorgesehen sein, dass der Soll-Differenzenquotient, die Soll-Steigung oder der Soll-C-Wert in Abhängigkeit von zumindest einem ersten für das Gargut charakteristischen Parameter, insbesondere ausgewählt aus einer Gruppe umfassend das Kaliber des Gargutes, die Größe des Gargutes, die Art des Gargutes, den Ausgangszustand des Gargutes, wie frisch oder gefroren, und/oder die Menge an Gargut im Garraum, und/oder zumindest einem zweiten

Für den Garprozess charakteristischen Parameter, insbesondere ausgewählt aus der Temperatur, Feuchte und/oder Strömungsgeschwindigkeit der Garraumatmosphäre im Garraum, bestimmt wird.

Bevorzugt ist erfindungsgemäß, dass der erste und/oder zweite Parameter aus Benutzereingaben und/oder Sensorausgabedaten bestimmt wird bzw. werden.

Ferner wird mit der Erfindung vorgeschlagen, dass der erste Parameter über zumindest zwei in dem Gargut erfasste Temperaturwerte, insbesondere über die räumliche Verteilung der Temperatur im Inneren des Gargutes, bestimmt wird.

Darüber hinaus kann vorgesehen sein, dass der Soll-Differenzenquotient, die Soll-Steigung oder der Soll-C-Wert in Abhängigkeit der Wellenlänge der Mikrowellenstrahlung, der Eindringtiefe der Mikrowellenstrahlung in das Gargut, einer Garzeit, eines Energieverbrauchs und/oder Garqualität, insbesondere bestimmt durch einen inneren und äußeren Gargrad, bestimmt wird.

Ebenso kann dabei vorgesehen sein, dass der Soll-Differenzenquotient derart bestimmt wird, dass einerseits dann, wenn der ermittelte Differenzenquotient kleiner als der Soll-Differenzenquotient ist, eine Erhöhung der Mikrowellenleistung zu einer Erhöhung des Differenzenquotienten führt, und dass andererseits dann, wenn der ermittelte Differenzenquotient größer oder gleich dem Soll-Differenzenquotienten ist, eine Erhöhung der Mikrowellenleistung im Wesentlichen nicht zu einer Erhöhung des Differenzenquotienten führt, und/oder die Soll-Steigung derart bestimmt wird, dass einerseits dann, wenn die ermittelte Steigung kleiner als die Soll-Steigung ist, eine Erhöhung der Mikrowellenleistung zu einer Erhöhung der Steigung führt, und dass andererseits dann, wenn die ermittelte Steigung größer oder gleich der Soll-Steigung ist, eine Erhöhung der Mikrowellenleistung im Wesentlichen nicht zu einer Erhöhung der Steigung führt, und/oder der Soll-C-Wert derart bestimmt wird, dass einerseits dann, wenn der ermittelte C-Wert kleiner als der Soll-C-Wert ist, eine Erhöhung der Mikrowellenleistung zu einer Erhöhung des C-Wertes führt, und dass andererseits dann, wenn der ermittelte C-Wert größer oder gleich dem Soll-C-Wert ist, eine Erhöhung der Mikrowellenleistung im Wesentlichen nicht zu einer Erhöhung des C-Wertes führt, wobei eine Erhöhung des ermittelten Differenzenquotienten, der ermittelten Steigung und/oder des ermittelten C-Wertes bei Kenntnis der Eindringtiefe von Mikrowellenstrahlung in das zu garende Gargut, der Wellenlänge der Mikrowellenstrahlung und der Wärmediffusion im Gargut vorzugsweise abschätzbar ist.

Erfindungsgemäße Verfahren können auch dadurch gekennzeichnet sein, dass während des Garprozesses das Gargut nicht nur über eine Mikrowellenbeaufschlagung aufgeheizt wird, sondern zumindest zeitweise auch durch Beaufschlagung mit Heißluft und/oder Dampf.

Mit der Erfindung wird auch ein Gargerät mit einem Garraum, einer Mikrowellenabstrahlungsvorrichtung, umfassend zumindest eine Mikrowellenquelle, insbesondere ein Magnetron, eine Bedienvorrichtung, insbesondere zur Auswahl eines Garprozesses und/oder eines Gargutes, eine Sensiereinrichtung, insbesondere in Form eines in ein Gargut einführbaren Temperatursensorspiesses, vorzugsweise mit einer Vielzahl von Temperatursensoren, und einer Steuer- und/oder Regeleinrichtung, die zum Durchführen eines erfindungsgemäßen Verfahrens ausgelegt ist.

Das erfindungsgemäße Gargerät kann ferner gekennzeichnet sein durch eine Heizeinrichtung, insbesondere in Form einer elektrischen oder gasbetriebenen Heizeinrichtung, einer Feuchtigkeitszufuhreinrichtung, insbesondere in Form eines Dampfgenerators und/oder Wasserzerstäubers, einer Feuchtigkeitsabfuhreinrichtung, einer Garatmosphärenumwälzeinrichtung, insbesondere in Form eines Lüfterrades und/oder einer Pumpe, eine Wärmespeichereinrichtung, eine Energiespeichereinrichtung, einer Datenspeichereinrichtung, insbesondere zum Speichern von Soll-Differenzenquotienten, Soll-Steigungen und/oder Soll-C-Werten, einer Einleseeinrichtung, insbesondere zum Einlesen von Soll-Differenzenquotienten, Soll-Steigungen und/oder Soll-C-Werten, einer Ausgabe- und/oder Anzeigeeinrichtung, einer Verbindungseinrichtung, insbesondere zu einem weiteren Gargerät, einem Küchennetzwerk und/oder dem Internet, eine Kühleinrichtung, eine Reinigungseinrichtung und/oder zumindest eine Gargutträgereinrichtung zur Aufnahme von zumindest einem Stück Gargut, jeweils vorzugsweise in Wirkverbindung mit der Steuer- oder Regeleinrichtung.

Es ist somit die überraschende Erkenntnis der Erfindung, dass insbesondere bei Kerntemperatur- oder C-Wert geführten Garprozessen durch eine Auswertung des Kerntemperaturanstiegs eine optimale Einstellung der Mikrowellenleistung erfolgen kann, so dass ein möglichst schnelles Garen bei gleichzeitig minimalem Energieaufwand ermöglicht wird. Empirisch wurde festgestellt, dass ein gegebenes Gargut bei Beaufschlagung mit Mikrowellenstrahlung einen maximal möglichen Kerntemperaturanstieg besitzt, der abhängig ist von ersten, für das Gargut charakteristischen Parametern, wie dem Kaliber des Gargutes, der Größe des Gargutes, der Art des Gargutes, dem Ausgangszustand des Gargutes und/oder der Menge an Gargut im Garraum oder zweiten, für den Garprozess charakteristischen Parametern, wie der Temperatur, der Feuchte und/oder der Strömungsgeschwindigkeit der Garraumatmosphäre im Garraum. Nach Erreichen dieses maximalen Anstiegs führt eine Erhöhung der Mikrowellenleistung nicht mehr zu einem zusätzlichen Anstieg des Kerntemperaturverlaufs. Mit anderen Worten erfährt der Anstieg bzw. die Steigung des Kerntemperaturverlaufs ab einer bestimmten Mikrowellenleistung eine Sättigung, die eine physikalische Grenze für die minimal erreichbare Garzeit darstellt. Dabei verhält sich der zeitliche Verlauf der Kerntemperatur im gesättigten Fall im Wesentlichen linear, so dass die Steigung dieses nahezu linearen Kerntemperaturverlaufs ein Kriterium für das Erreichen dieser Sättigung ist. Im Speziellen konnte dieser Effekt in einem Gargerät mit einem kombinierten Mikrowellen-Dampf-Betrieb beim Garen von Kartoffeln nachgewiesen werden.

Der Sättigungseffekt zeigt sich besonders gut bei solchem Gargut, bei dem aufgrund des Gargut-Kalibers und der Gargut-Art ein Großteil der Mikrowellenleistung in äußeren, den Kern des Garguts umgebenden Schichten absorbiert wird, bevor die Mikrowellenstrahlung den Kern des Garguts erreicht. Dies ist im Speziellen dann der Fall, wenn die Eindringtiefe der Mikrowellenstrahlung deutlicher kleiner als der Durchmesser des Garguts ist. In diesem Fall findet aufgrund von Wärmediffusion ein Wärmetransport von den heißeren, äußeren Schichten hin zum kälteren Kern statt. Verantwortlich für den Sättigungseffekt ist der Wasseranteil in den äußeren Schichten des Garguts, der bewirkt, dass die Temperatur dieser äußeren Schichten nicht über die Siedetemperatur des Wassers (100° C) steigen kann. Wegen der großen Verdampfungswärme des Wassers ist nämlich ein relativ großer Energiebetrag zur Verdampfung dieses Wassers notwendig, so dass durch diesen Effekt die Temperatur der äußeren Schichten des Garguts stabilisiert wird. Da die äußeren Schichten nicht heißer werden können als 100° C, ist der maximal mögliche Kerntemperaturanstieg somit limitiert.

Je nach Kaliber oder Art des Garguts wird ein Teil der Mikrowellenleistung im Kern des Garguts absorbiert werden, so dass eine Erhöhung der in den Garraum eingestrahlten Mikrowellenleistung eine Erhöhung des Kerntemperaturanstiegs nach sich ziehen würde. Die für eine Verwendung eines Temperatursensorspießes in Frage kommenden Gargut-Kaliber sind jedoch im Allgemeinen so groß, dass der Anteil der im Kern absorbierten Mikrowellenleistung vernachlässigt werden kann.

Zur Einstellung einer optimalen Mikrowellenleistung kann eine Regelung unter Berücksichtigung von gemessenen Kerntemperaturanstiegswerten, insbesondere einem Differenzquotienten, einer Steigung oder einem C-Wert, und gespeicherten entsprechenden Soll-Kerntemperaturanstiegswerten erfolgen. Dabei wird der Soll-Kerntemperaturanstiegswert zuvor derart bestimmt, dass einerseits, wenn der Kerntemperaturanstiegswert kleiner als der Soll-Kerntemperaturanstiegswert ist, eine Erhöhung der Mikrowellenleistung zu einer Erhöhung des Kerntemperaturanstiegswertes führt, und dass andererseits, wenn der Kerntemperaturanstiegswert größer oder gleich dem Soll-Kerntemperaturanstiegswert ist, eine Erhöhung der Mikrowellenleistung nicht zu einer Erhöhung des Kerntemperaturanstiegswertes führt oder zumindest nicht zu einer Erhöhung des Kerntemperaturanstiegswerts aufgrund von Wärmediffusion von äußeren, den Kern umgebenden Schichten des Garguts zum Kern des Garguts.

Weitere Merkmale und Vorteile der Erfindung ergeben sich aus der nachstehenden Beschreibung, in der Ausführungsbeispiele der Erfindung anhand von schematischen Zeichnungen im einzelnen erläutert werden. Dabei zeigt:

Figur 1     ein Gargut im Querschnitt mit einem Temperatursensorspieß;

Figur 2     die zeitlichen Kerntemperaturverläufe von Gargut für einen kombinierten Mik- rowellen-Dampf Betrieb bei unterschiedlichen Mikrowellenleistungen; und

Figur 3     ein Flussdiagramm zur Erläuterung eines erfindungsgemäßen Verfahrens.

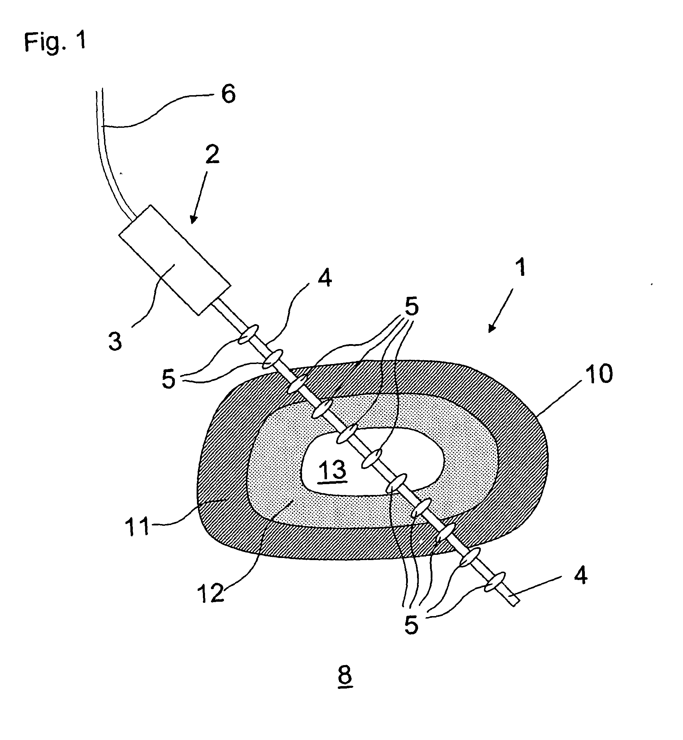

Figur 1 zeigt ein Gargut 1 im Querschnitt, welches beispielsweise eine Kartoffel ist. In das Gargut 1 ist eine Sensiereinrichtung in Form eines Temperatursensorspießes 2 eingebracht. Der Temperatursensorspieß 2 umfasst einen Griff 3 und einem spießartigen Stab 4, der mit dem Griff 3 verbunden ist und an den eine Vielzahl von äquidistant beabstandeten Temperatursensoren 5 angebracht ist. Der Temperatursensorspieß 3 steht über ein Kabel 6 mit einer Regeleinheit eines in Figur 1 nicht gezeigten Gargeräts in Verbindung. Zum Garen des Garguts 1 umfasst das Gargerät eine Mikrowellenabstrahlungsvorrichtung zur Abstrahlung von Mikrowellen, insbesondere der Frequenz 2.45 GHz, in seinen Garraum 8. Überdies können die Temperatur, die Feuchte und die Strömungsgeschwindigkeit der Atmosphäre im Garraum 8 mittels einer Dampferzeugungsvorrichtung, insbesondere in Form eines Dampfgenerators und/oder einer Beschwadungsvorrichtung, einer Heizvorrichtung und einer Umwälzeinrichtung zum Umwälzen der Garraumatmosphäre über die Regeleinheit eingestellt werden. Es ist davon auszugehen, dass das Gargut 1 im wesentlichen von allen Seiten homogen mit Mikrowellenstrahlung, Heißluft und/oder heißem Dampf beaufschlagt werden kann.

Unter einer Mikrowellenleistung P wird hier die mittlere Mikrowellenleistung verstanden, die von einer rechteckförmig modulierten bzw. getakteten Mikrowellenquelle, insbesondere in Form eines Magnetrons, an den Garraum 8 des Gargeräts abgegeben wird. Über das Verhältnis der Anschaltzeiten zu den Pausenzeiten der Mikrowellenquelle kann so, wie aus dem Stand der Technik bekannt, eine Variation der (mittleren) Mikrowellenleistung P erreicht werden.

Zur Verwendung des Temperatursensorspießes 2 ist eine bestimmte Mindestgröße bzw. ein bestimmtes Mindestkaliber des Garguts 1 erforderlich, um eine verlässliche Aussage über die Kerntemperatur desselben treffen zu können, die als die Temperatur am kältesten Punkt innerhalb des Garguts 1 definiert ist. So sollten, wie in Figur 1 gezeigt, bei in das Gargut 1 eingesteckten Temperatursensorspieß 2 mehrere Temperatursensoren 5 vom Gargut 1 umhüllt sein, so dass genügend Messpunkte zur Charakterisierung der räumlichen Temperaturverteilung im Gargut 1, gegebenenfalls in Verbindung mit einer Interpolation von Messpunkten, erfolgen kann. Neben der Bestimmung der Kerntemperatur, erlaubt die Erfassung der räumlichen Temperaturverteilung generell auch die Bestimmung des Gargut-Kalibers. Neben einer Vielzahl von Gargut-Arten sind Kartoffeln aufgrund ihrer Größe bzw. ihres Kalibers für ein Garen mittels eines Temperatursensorspiesses 2 gut geeignet. Die folgenden Ausführungen beziehen sich daher beispielhaft auf Kartoffeln.

Die Kartoffel 1 befindet sich zusammen mit weiteren ähnlich quaderförmig ausgebildeten Kartoffeln auf einem oder mehreren Gargutträgern (nicht in Figur 1 gezeigt) im Garraum 8 des Gargeräts. Alle Kartoffeln 1 dieser Gargut-Charge sind so präpariert, dass sie bei einem Gewicht von 160 g eine Länge von ca. 10 cm, eine Breite von ca. 6 cm und eine Tiefe von ca. 4 cm besitzen. Zur Charakterisierung der räumlichen Temperaturverteilung innerhalb der Kartoffeln 1 während des Garprozesses ist es ausreichend, den Temperatursensorspieß 2 nur in eine Kartoffel 1 einzustecken, da sich die übrigen Kartoffeln im Wesentlichen gleich verhalten.

Die in Figur 1 gezeigte Kartoffel 1 wird, wie bereits erwähnt, im kombinierten Mikrowellen-Dampf-Betrieb gegart. Durch die Beaufschlagung der Oberfläche 10 der Kartoffel 1 mit Dampf kann so ein unerwünschtes Austrocknen der Oberfläche 10 und der sich daran anschließenden Randschicht 11 der Kartoffel 1 reduziert werden.

Für den Fall des kombinierten Mikrowellen-Dampf-Betriebs lassen sich im Wesentlichen drei verschiedene Wärmetransport-Mechanismen unterscheiden, die zu einer Erhöhung der Kerntemperatur der Kartoffel 1 führen, nämlich wie folgt:

i) Indirekte Erwärmung des Kerns durch heißen Dampf

Während des Garprozesses ist die Kartoffel 1 der dampfhaltigen Garraumatmosphäre im Garaum 8 ausgesetzt, wobei die Oberfläche 10 der Kartoffel 1 im Wesentlichen die Temperatur der dampfhaltigen Garraumatmosphäre annimmt. Durch Wärmediffusion wird Wärme, dem Temperaturgradienten innerhalb der Kartoffel 1 folgend, von der Oberfläche 10 durch die Randschicht 11 und eine Zwischenschicht 12 zum Kern 13 der Kartoffel 1 transportiert. Der Kern 13 wird somit indirekt über den Wärmetransport von äußeren Schichten 11, 12 der Kartoffel 1 erwärmt.

ii) Direkte Erwärmung des Kerns durch Mikrowellen

Bei Beaufschlagung der Kartoffel 1 mit Mikrowellen wird Wärme direkt in der Kartoffel 1 durch Absorption von Mikrowellenstrahlung erzeugt. Das Absorptionsverhalten kann durch eine Eindringtiefe $d$ beschrieben werden, wobei die Intensität der Mikrowellenstrahlung nach Propagation durch das absorbierende Gargut 1 um die Strecke *d* um den Faktor 1/e abgeschwächt wird, wobei *e* die Eulersche Zahl ist. Bei rohen Kartoffeln, Fleisch oder Erbsen beträgt die Eindringtiefe d ≈ 1 cm. Von Gargut zu Gargut kann dieser Wert jedoch wegen des jeweils unterschiedlichen Wassergehalts variieren. Je nach Größe der Kartoffel wird ein Teil der Mikrowellenstrahlung demnach im Kern 13 absorbiert und führt zu einer direkten Erwärmung des Kerns 13.

### iii) Indirekte Erwärmung des Kerns durch Mikrowellen

Bevor die Mikrowellenstrahlung den Kern 13 erreicht, muss diese durch die Randschicht 11 und die Zwischenschicht 12 der Kartoffel 1 propagieren, wobei je nach Größe der Kartoffel 1 ein typischerweise großer Teil der Mikrowellenstrahlung absorbiert wird. In ähnlicher Weise wie unter Punkt i) beschrieben, findet nun ein Wärmetransport durch Wärmediffusion von den äußeren wärmeren Schichten 11, 12 zum kälteren Kern 13 statt. Hierbei handelt es sich demnach um eine indirekte Erwärmung des Kerns 13 durch Mikrowellen.

Je nach Größe bzw. Kaliber des Garguts wird der Anteil der direkten Erwärmung (siehe Punkt ii)) und der der indirekten Erwärmung (siehe Punkt iii)) durch Mikrowellenstrahlung variieren. Bei kleinen Gargut-Kalibern, wie beispielsweise bei Erbsen, kann die Mikrowellenstrahlung mit der nahezu vollen Intensität in den Kern gelangen und dort direkt Wärme erzeugen. Allerdings ist die Verwendung eines Temperatursensorspießes zusammen mit solch kleinen Kalibern nicht möglich. Im Gegensatz dazu findet im Falle eines Großbratens mit entsprechend großem Kaliber beispielsweise nahezu keine direkte Erwärmung des Kerns mehr statt. Die hier diskutierten präparierten Kartoffeln 1 mit den bekannten Abmessungen (10 cm x 6 cm x 4 cm) stellen ein mittelgroßes Kaliber dar. Ein Großteil der Mikrowellenstrahlung wird jedoch auch bei dieser Kartoffel 1 von den äußeren Schichten 11, 12 absorbiert, bevor der Kern 13 erreicht wird. Bei der gegebenen Geometrie der präparierten Kartoffeln 1 beträgt die minimale Distanz vom Kern 13 zur Oberfläche 10 ca. 2 cm, was der zweifachen Eindringtiefe d der Mikrowellenstrahlung entspricht. Nach Propagation entlang dieser minimalen Distanz ist die Intensität der Mikrowellenstrahlung demnach um den Faktor $1/e^2 \approx$ 0,13 des ursprünglichen Wertes abgeschwächt. Eine mikroweleninduzierte Erwärmung des Kerns 13 der Kartoffel 1 findet somit im Wesentlichen indirekt (siehe Punkt iii)) durch Wärmediffusion statt.

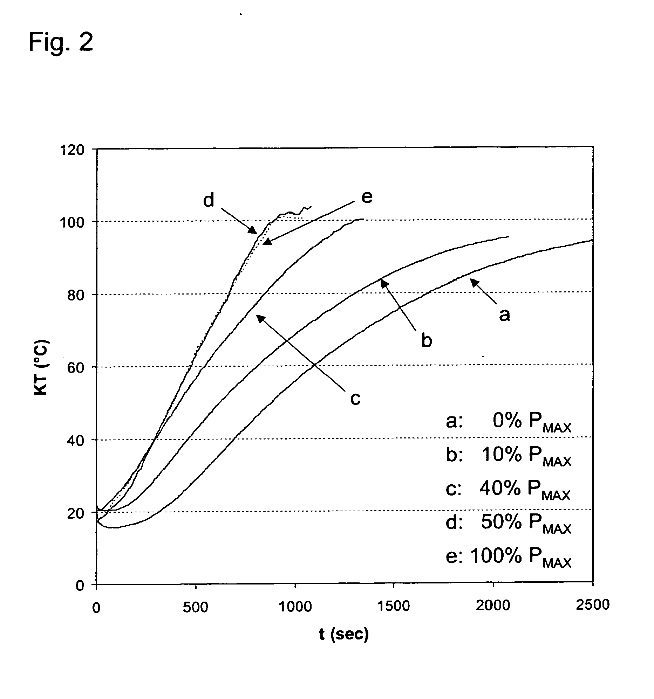

Auswirkungen der Beaufschlagung der präparierten Kartoffel 1 mit Mikrowellenstrahlung auf den zeitlichen Kerntemperaturverlauf während eines Garprozesses sind in Figur 2 dargestellt. Die Größe KT steht dabei für die mittels des Temperatursensorspießes 2 ermittelte Kerntemperatur, die in Abhängigkeit der Garzeit t aufgetragen ist. Figur 2 zeigt insgesamt fünf Kerntemperaturverläufe a bis e für unterschiedliche Garprozesse mit identischen Kartoffel-Chargen, die allesamt in der zuvor beschriebenen Weise präpariert wurden. Zum Garen der Kartoffeln 1 wurde ein kombinierter Mikrowellen-Dampf-Betrieb verwendet, bei dem die Temperatur und die Feuchte des heißen Dampfes für alle fünf Garprozesse konstant waren, während die Mikrowellenleistung P nach Ende eines Garprozesses und Austausch der Kartoffel-Chargen jeweils schrittweise von 0 % auf 100 % der maximalen Mikrowellenleistung $P_{MAX}$ erhöht wurde. Die Mikrowellenleistungen P für die einzelnen in Figur 2 gezeigten Kerntemperaturverläufe sind im Detail P = 0% $P_{MAX}$ (Kurve a), P = 10% $P_{MAX}$ (Kurve b), P = 40% $P_{MAX}$ (Kurve c), P = 50% $P_{MAX}$ (Kurve d) und P = 100% $P_{MAX}$ (Kurve e, gestrichelt).

Beim Garen ohne Mikrowellenzuschaltung (Kurve a) erfolgt die Erhöhung der Kerntemperatur KT durch eine indirekte Erwärmung des Kerns nur durch den die Kartoffel 1 umgebenden heißen Dampf, wie zuvor unter Punkt i) beschrieben. Ausgehend von diesem Kerntemperaturverlauf (Kurve a) führt eine Erhöhung der Mikrowellenleistung P zunächst zu einem schnelleren Anstieg der Kerntemperatur bzw. zu einer größeren Steigung des Kerntemperaturverlaufs (Kurven b, c, und d). Mit anderen Worten erhöht sich für höhere Mikrowellenleistungen P der Kerntemperaturanstiegswert KT' zu einer gegebenen Garzeit t, der insbesondere der ersten zeitlichen Ableitung des Kerntemperaturverlaufs oder dem Differenzenquotienten KT' = ΔKT / Δt entspricht, wobei ΔKT die Differenz zwischen zwei an einer Stelle zu zwei verschiedenen Mess-Zeitpunkten $t_1$ und $t_2$ gemessenen Kerntemperaturwerten und Δt = $t_2 - t_1$ die entsprechende Differenz zwischen den zwei Mess-Zeitpunkten ist. Jedoch führt eine weitere Erhöhung der Mikrowellenleistung auf P = 100% $P_{MAX}$ (Kurve e) nicht zu einer weiteren Erhöhung des Kerntemperaturanstiegs im Vergleich zum Fall mit P = 50% $P_{MAX}$ (Kurve d). Erstaunlicherweise liegen die beiden Kerntemperaturverläufe d (durchgezogene Linie) und e (gestrichelte Linie) nahezu identisch übereinander. Somit lässt sich festhalten, dass aufgrund einer Sättigung des Kerntemperaturanstiegs eine Erhöhung der Mikrowellenleistung P von 50% auf 100% der Maximalleistung $P_{MAX}$ nicht zu einer Beschleunigung des Garprozesses führt. Vielmehr werden bei voller Mikrowellenleistung (Kurve e) 50% der Mikrowellenleistung umsonst aufgebracht, ohne zur Erhöhung der Kerntemperatur KT und zu einem schnelleren Kerntemperaturanstiegs beizutragen.

Dieses Verhalten kann durch eine Betrachtung des Wärmetransports von den äußeren Schichten 11, 12 zum Kern 13 der Kartoffel 1 erklärt werden. Bedingt durch das Kaliber der präparierten Kartoffeln 1 wird nämlich der Hauptanteil der Mikrowellenstrahlung in der Randschicht 11 und der Mittelschicht 12 der Kartoffel 1 absorbiert, bevor diese den Kern 13 erreicht, so wie unter Punkt iii) beschrieben. Der hauptsächliche Anteil der durch Mikrowellenstrahlung hervorgerufenen Wärme entsteht demnach durch die Wärmediffusion der heißeren äußeren Schichten 11, 12 zum Kern 13 der Kartoffel 1. Aufgrund des Wasseranteils in den äußeren Schichten 11, 12 der Kartoffel 1 kann jedoch die Temperatur dieser Schichten 11, 12 nicht über die Siedetemperatur des Wassers (100° C) steigen. Wegen der großen Verdampfungswärme des Wassers ist nämlich ein relativ großer Energiebetrag zur Verdampfung dieses Wassers notwendig, so dass durch diesen Effekt die Temperatur der äußeren Schichten 11, 12 stabilisiert wird. Eine Reduzierung des Wassergehalts bzw. ein Austrocknen der Oberfläche 10 und der Randschicht 11 der Kartoffel 1 wird überdies durch die dampfhaltige Garraumatmosphäre erschwert, was zu einer zusätzlichen Stabilisierung der Temperatur der äußeren Schichten 11, 12 führt. Da die äußeren Schichten 11, 12 nicht heißer werden können als 100° C, ist der maximal mögliche Kerntemperaturanstieg limitiert.

Energetisch wäre es also eine Verschwendung, mehr Mikrowellenleistung als nötig in den Garraum 8 einzuspeisen. Denn ab einer bestimmten Steigung des Kerntemperaturverlaufs KT führt eine Erhöhung der Mikrowellenleistung nicht mehr zu einer Erhöhung der Steigung und damit auch nicht zu einem schnelleren Garen. Es existiert somit ein maximal möglicher Kerntemperaturanstieg, der insbesondere abhängig von der Art des Garguts, dem Kaliber des Garguts und dem angewählten Garprozess, insbesondere der Temperatur und der Feuchte im Garraum 8 während des Garprozesses, ist. Die genannten Garprozess- und Gargut-Parameter können über Benutzereingaben oder geeignete Sensiereinrichtungen des Gargeräts bestimmt werden. Eine Bestimmung des Gargut-Kalibers kann, wie bereits zuvor erwähnt, durch die Auswertung der mittels eines Temperatursensorspießes 2 gemessenen räumlichen Temperaturverteilung der Kartoffeln erfolgen. Mittels dieser Parameter kann ein Soll-Kerntemperaturanstiegwert bestimmt werden, der in einer Speichereinheit des Gargeräts zum Zwecke der Regelung des Kerntemperaturanstiegs gespeichert wird.

Anhand der gemessenen Kerntemperaturverläufe in Figur 2 kann in erster Näherung eine optimale Einstellung der Mikrowellenleistung extrahiert werden, die zum Einen ein möglichst schnelles Garen und zum Anderen einen möglichst geringen Energieverbrauch ermöglicht. Der Garprozess wird demnach optimalerweise mit einer Mikrowellenleistung von P = 40% $P_{MAX}$ (Kurve c) gestartet, da eine Kerntemperatur von KT = 40° C hier genauso schnell erreicht wird wie im Falle von P = 50% $P_{MAX}$ (Kurve d) und P = 100% $P_{MAX}$ (Kurve e). Nach Erreichen der 40° C im Kern kann die Mikrowellenleistung auf P = 50% $P_{MAX}$ (Kurve d) erhöht werden, da ab dieser Kerntemperatur der Kerntemperaturanstieg der Kurve d im Vergleich zur Kurve c höher ist. Durch eine gezielte Regelung der Mikrowellenleistung kann so ein möglichst schneller Anstieg der Kerntemperatur bei Minimierung der aufgewendeten Energie bewirkt werden.

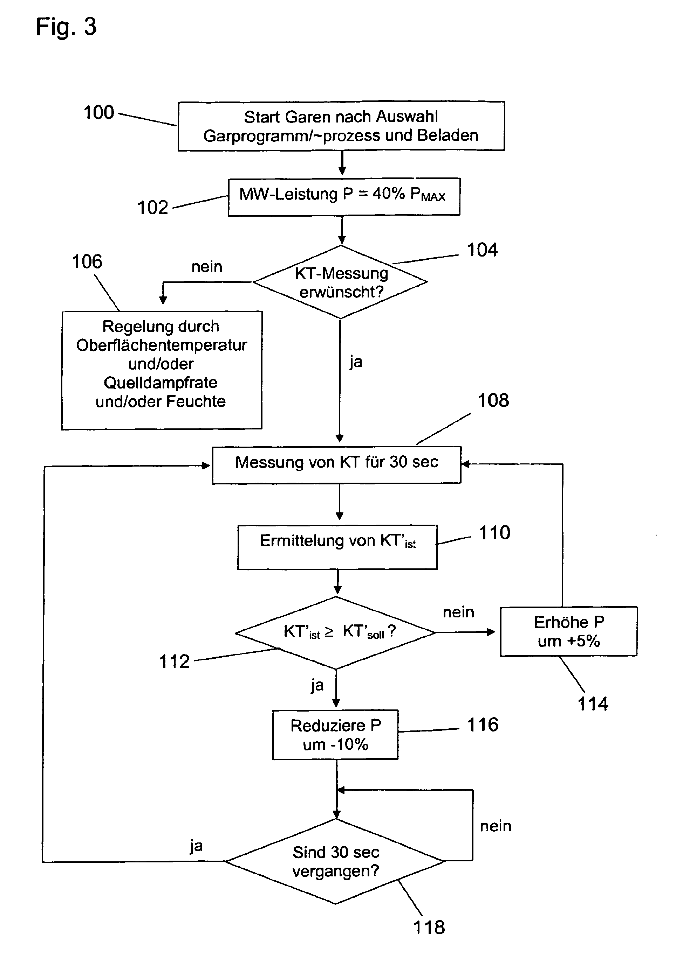

In Figur 3 ist ein Flussdiagramm dargestellt, welches zur Erläuterung eines erfindungsgemäßen Verfahrens zur Einstellung der Mikrowellenleistung dient.

Demnach wird der Garprozess nach einer benutzerseitigen Auswahl eines Garprogramms bzw. Garprozesses und einem Beladen des Garraums mit Gargut gestartet (Schritt 100), und sodann die Mikrowellenleistung zuerst auf P = 40% $P_{MAX}$ eingestellt wird (Schritt 102), was den Startbedingungen von Kurve c in Figur 2 entspricht. Ebenso ist es möglich, auch andere Startwerte für die Mikrowellenleistung zu verwenden, wie zum Beispiel P = 100% $P_{MAX}$ oder P = 80% $P_{MAX}$.

Daraufhin folgt eine Entscheidung, ob während des Garprozesses eine Kerntemperaturmessung erfolgen soll oder nicht (Schritt 104). Diese Entscheidung kann entweder über eine Benutzereingabe oder automatisch vom Garprozess getroffen werden. Ist keine Kerntemperaturmessung erwünscht, erfolgt die Regelung des Garprozesses anhand der Erfassung der Oberflächentemperatur des Garguts, der Quelldampfrate und/oder der Feuchte (Schritt 106). Wenn eine Kerntemperaturmessung zur Regelung des Garprozesses erwünscht ist, kommt das erfindungsgemäße Verfahren zum Einsatz.

Dann wird zunächst für ein Zeit-Intervall $\Delta t = t_2 - t_1$ von beispielsweise $\Delta t$ = 30 Sekunden die Kerntemperatur KT mittels des in ein Gargut 1 eingesteckten Temperatursensorspießes 2 erfasst und an die Regeleinheit des Gargeräts übermittelt (Schritt 108). Im Anschluss daran berechnet die Regeleinheit einen für den genannten Zeitraum charakteristische Steigung KT' des Kerntemperaturverlaufs (Schritt 110), die typischerweise die mittlere Steigung des zeitlichen Kerntemperaturverlaufs in diesem Zeit-Intervall $\Delta t$ beschreibt. Während des Zeitintervalls $\Delta t$ werden zumindest zwei Werte für die Kerntemperatur erfasst. Eine sehr einfache Möglichkeit zur Bestimmung der Steigung des Kerntemperaturverlaufs KT' ist die Messung von nur zwei Kerntemperaturwerten zur Zeit $t_1$ am Anfang und zur Zeit $t_2$ am Ende des Zeitintervalls $\Delta t$, so dass sich die Steigung KT' aus dem Differenzenquotienten KT' = $\Delta KT/\Delta t$ berechnet, wobei $\Delta KT$ = KT($t_2$) - KT($t_1$) die Differenz der beiden erfassten Kerntemperaturwerte zu dem Zeitpunkt $t_1$ und $t_2$ ist. Alternativ dazu können auch weit mehr als nur zwei Kerntemperaturmesswerte im zuvor genannten Zeit-Intervall erfasst werden, wobei dann die mittlere Steigung des Kerntemperaturverlaufs durch eine lineare Interpolation der Messpunkte bestimmte werden kann.

Im nächsten Schritt (Schritt 112) wird innerhalb der Regeleinheit des Gargeräts die gemessene Steigung KT' mit einer gespeicherten Soll-Steigung $KT'_{soll}$ verglichen, die in Abhängigkeit von Garprozess- und Gargut-Parametern ausgewählt wird. Falls KT' kleiner als $KT'_{soll}$ ist, wird die Mikrowellenleistung P erhöht, beispielsweise um 5 % (Schritt 114). Sollte KT' größer als oder gleich $KT'_{soll}$ sein, wird die Mikrowellenleistung P um -10 % reduziert (Schritt 116). Der Soll-Kerntemperaturanstiegswert $KT'_{Soll}$ orientiert sich am maximal möglichen Kerntemperaturanstieg, der aufgrund der zuvor genannten thermodynamischen Betrachtungen nicht überschritten werden kann. Um nicht unnötig Energie zu verschwenden, muss bei Erreichen des Soll-Kerntemperaturanstiegswertes die Mikrowellenleistung reduziert werden, da nicht unterschieden werden kann, ob die Mikrowellenleistung gerade optimal oder zu hoch ist.

Nach einer Wartezeit von beispielsweise 30 Sekunden findet eine erneute Messung der Kerntemperatur KT für ein weiteres Zeit-Intervall, beispielsweise 30 Sekunden, statt (Schritt 118), es werden also die Schritte 108 bis 116 wiederholt. Dieser Kreislauf setzt sich solange fort, bis das Ende des Garprozesses erreicht ist, der in Figur 3 übersichtlichkeitshalber nicht dargestellt ist.

Die in der vorstehenden Beschreibung, den Zeichnungen sowie den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

Bezugszeichenliste

| | |
|---|---|
| 1 | Gargut |
| 2 | Temperatursensorspieß |
| 3 | Griff |
| 4 | Stab |
| 5 | Temperatursensor |
| 6 | Kabel |
| 8 | Garraum |
| 10 | Oberfläche |
| 11 | Randschicht |
| 12 | Mittelschicht |
| 13 | Kern |
| 100 - 118 | Schritte |
| a - e | Kerntemperaturverlauf |
| KT | Kerntemperatur |
| KT' | Steigung des Kerntemperaturverlaufs |
| KT'$_{Soll}$ | Steigung des Soll-Kerntemperaturverlaufs |
| P | Mikrowellenleistung |
| P$_{Max}$ | Maximale Mikrowellenleistung |
| t | Zeit |

**Patentansprüche**

1. Verfahren zur Einstellung einer in einem Garraum eines Gargerätes während eines Garprozesses zum Garen eines Gargutes abgegebenen Mikrowellenleistung in Abhängigkeit von zumindest einer erfassten Kerntemperatur, **gekennzeichnet durch** folgende Schritte:

   a) Messen der Kerntemperatur KT(t) zumindest an zwei Zeitpunkten $t_1$ und $t_2$;
   b) Ermitteln des Differenzenquotienten der Kerntemperaturen KT' = $\Delta$KT/ $\Delta$t aus der Änderung der gemessenen Kerntemperaturen $\Delta$KT = KT ($t_2$) - KT ($t_1$) in dem Zeitintervall $\Delta$t = $t_2$ - $t_1$ oder der Steigung der Kerntemperatur aus der ersten Ableitung der gemessenen Kerntemperatur KT(t) im Zeitintervall $\Delta$t oder des C-Wertes aus dem Verlauf der gemessenen Kerntemperatur KT (t), nämlich

$$C_{BT}^{UF} = \int_{t_1}^{t_2} UF^{\frac{[KT(t)-BT]}{10}} dt \quad ,$$

   wobei
   UF = Umrechnungsfaktor, und
   BT = Bezugstemperatur = 100°C;
   c) Vergleichen des ermittelten Differenzenquotienten mit einem für das Gargut und/oder den Garprozess zuvor ermittelten Soll-Differenzenquotienten oder der ermittelten Steigung mit einer für das Gargut und/oder den Garprozess zuvor ermittelten Soll-Steigung oder des ermittelten C-Wertes mit einem für das Gargut und/oder den Garprozess zuvor ermittelten Soll-C-Wert; und
   d) Einstellen der Mikrowelleneinstellung in Abhängigkeit von dem Ergebnis besagten Vergleichs, wobei die Mikrowellenleistung erhöht wird, wenn der ermittelte Differenzenquotient kleiner als der Soll-Differenzquotient oder die ermittelte Steigung kleiner als die Soll-Steigung oder der ermittelte C-Wert kleiner als der Soll-C-Wert ist, und/oder die Mikrowellenleistung verringert wird, wenn der ermittelte Differenzenquotient größer oder gleich dem Soll-Differenzenquotient ist oder die ermittelte Steigung größer oder gleich der Soll-Steigung ist oder der ermittelte C-Wert größer oder gleich dem Soll-C-Wert ist.

2. Verfahren nach Anspruch 1, **dadurch gekennzeichnet, dass** der Soll-Differenzenquotient, die Soll-Steigung oder der Soll-C-Wert in Abhängigkeit von zumindest einem ersten für das Gargut charakteristischen Parameter, insbesondere ausgewählt aus einer Gruppe umfassend das Kaliber des Gargutes, die Größe des Gargutes, die Art des Gargutes, den Ausgangszustands des Gargutes, wie frisch oder gefroren, und/oder die Menge an Gargut im Garraum, und/oder zumindest einem zweiten für den Garprozess charakteristischen Parameter, insbesondere ausgewählt aus der Temperatur, Feuchte und/oder Strömungsgeschwindigkeit der Garraumatmosphäre im Garraum, bestimmt wird.

3. Verfahren nach Anspruch 2, **dadurch gekennzeichnet, dass** der erste und/oder zweite Parameter aus Benutzereingaben und/oder Sensorausgabedaten bestimmt wird bzw, werden.

4. Verfahren nach Anspruch 3, **dadurch gekennzeichnet, dass**
der erste Parameter über zumindest zwei in dem Gargut erfasste Temperaturwerte, insbesondere über die räumliche Verteilung der Temperatur im Inneren des Gargutes, bestimmt wird.

5. Verfahren nach einem der vorangehenden Ansprüche, **dadurch gekennzeichnet, dass**
der Soll-Differenzenquotient, die Soll-Steigung oder der Soll-C-Wert in Abhängigkeit der Wellenlänge der Mikrowellenstrahlung, der Eindringtiefe der Mikrowellenstrahlung in das Gargut, einer Garzeit, eines Energieverbrauchs und/oder einer Garqualität, insbesondere bestimmt durch einen inneren und äußeren Gargrad, bestimmt wird.

6. Verfahren nach einem der vorangehenden Ansprüche, **dadurch gekennzeichnet, dass** der Soll-Differenzenquotient derart bestimmt wird, dass einerseits dann, wenn der ermittelte Differenzenquotient kleiner als der Soll-Differenzenquotient ist, eine Erhöhung der Mikrowellenleistung zu einer Erhöhung des Differenzenquotienten führt, und dass andererseits dann, wenn der ermittelte Differenzenquotient größer oder gleich dem Soll-Differenzenquotienten ist, eine Erhöhung der Mikrowellenleistung im Wesentlichen nicht zu einer Erhöhung des Differenzenquotienten führt, und/oder
die Soll-Steigung derart bestimmt wird, dass einerseits dann, wenn die ermittelte Steigung kleiner als die Soll-Steigung ist, eine Erhöhung der Mikrowellenleistung zu einer Erhöhung der Steigung führt, und dass andererseits dann, wenn die ermittelte Steigung größer oder gleich der Soll-Steigung ist, eine Erhöhung der Mikrowellenleistung im Wesentlichen nicht zu einer Erhöhung der Steigung führt, und/oder
der Soll-C-Wert derart bestimmt wird, dass einerseits dann, wenn der ermittelte C-Wert kleiner als der Soll-C-Wert ist, eine Erhöhung der Mikrowellenleistung zu einer Erhöhung des C-Wertes führt, und dass andererseits dann, wenn der ermittelte C-Wert größer oder gleich dem Soll-C-Wert ist, eine Erhöhung der Mikrowellenleistung im Wesentlichen nicht zu einer Erhöhung des C-Wertes führt, wobei eine Erhöhung des ermittelten Differenzenquotienten, der ermittelten Steigung und/oder des ermittelten C-Wertes bei Kenntnis der Eindringtiefe von Mikrowellenstrahlung in das zu garende Gargut, der Wellenlänge der Mikrowellenstrahlung und der Wärmediffusion im Gargut vorzugsweise abschätzbar ist.

7. Verfahren nach einem der vorangehenden Ansprüche, **dadurch gekennzeichnet, dass** während des Garprozesses das Gargut nicht nur über eine Mikrowellenbeaufschlagung aufgeheizt wird, sondern zumindest zeitweise auch durch Beaufschlagung mit Heißluft und/oder Dampf.

8. Gargerät mit einem Garraum, einer Mikrowellenabstrahlungsvorrichtung, umfassend zumindest eine Mikrowellenquelle, insbesondere ein Magnetron, eine Bedienvorrichtung, insbesondere zur Auswahl eines Garprozesses und/oder eines Gargutes, eine Sensiereinrichtung, insbesondere in Form eines in ein Gargut einführbaren Temperatursensorspiesses, vorzugsweise mit einer Vielzahl von Temperatursensoren, und einer Steuer- oder Regeleinrichtung, die zum Durchführen eines Verfahrens nach einem der vorangehenden Ansprüche ausgelegt ist.

9. Gargerät nach Anspruch 8, **gekennzeichnet durch** eine Heizeinrichtung, insbesondere in Form einer elektrischen oder gasbetriebenen Heizeinrichtung, einer Feuchtigkeitszufuhreinrichtung, insbesondere in Form eines Dampfgenerators und/oder Wasserzerstäubers, einer Feuchtigkeitsabfuhreinrichtung, einer Garatmosphärenumwälzeinrichtung, insbesondere in Form eines Lüfterrades und/oder einer Pumpe, eine Wärmespeichereinrichtung, eine Energiespeichereinrichtung, einer Datenspeichereinrichtung, insbesondere zum Speichern von Soll-Differenzenquotienten, Soll-Steigungen und/oder Soll-C-Werten, einer Einleseeinrichtung, insbesondere zum Einlesen von Soll-Differenzenquotienten, Soll-Steigungen und/oder Soll-C-Werten, einer Ausgabe- und/oder Anzeigeeinrichtung, einer Verbindungseinrichtung, insbesondere zu einem weiteren Gargerät, einem Küchennetzwerk und/oder dem Internet, eine Kühleinrichtung, eine Reinigungseinrichtung und/oder zumindest eine Gargutträgereinrichtung zur Aufnahme von zumindest einem Stück Gargut, jeweils vorzugsweise in Wirkverbindung mit der Steuer- oder Regeleinrichtung.

**Claims**

1. A method for adjusting a microwave output which is provided in a cooking chamber of a cooking device during a cooking process for cooking a product to be cooked, depending on at least one sensed core temperature, **characterized by** the following steps:

    a) Measuring the core temperature $KT(t)$ at a minimum of two moments in time $t_1$ and $t_2$;
    b) Determining the difference quotient of the core temperatures $KT' = \Delta KT / \Delta t$ using the change of the core temperatures $\Delta KT = KT(t_2) - KT(t_1)$ measured in the time interval $\Delta t = t_2 - t_1$, or the gradient of the core temperature using the first derivative of the measured core temperature KT(t) in the time interval $\Delta t$, or the C value using the curve of the core temperature KT(t) that has been measured, i.e.

$$C_{BT}^{UF} = \int_{t_1}^{t_2} UF^{\frac{[KT(t)-BT]}{10}} dt,$$ wherein

UF = conversion factor and

BT = reference temperature = 100°C;

c) Comparing the difference quotient that has been determined with a set difference quotient which has been determined before for the product to be cooked and/or the cooking process, or the gradient that has been determined with a set gradient which has been determined before for the product to be cooked and/or the cooking process, or the C value that has been determined with a set C value which has been determined before for the product to be cooked and/or the cooking process; and

d) Adjusting the microwave setting depending on the result of said comparison, wherein microwave output is increased if the difference quotient that has been determined is smaller than the set difference quotient, or the gradient that has been determined is smaller than the set gradient, or the C value that has been determined is smaller than the set C value, and/or microwave output is reduced if the difference quotient that has been determined is larger than or equal to the set difference quotient, or the gradient that has been determined is larger than or equal to the set gradient, or the C value that has been determined is larger than or equal to the set C value.

2. A method according to claim 1, **characterized in that**
the set difference quotient, the set gradient or the set C value is determined depending on at least one first parameter that is characteristic of the product to be cooked, in particular selected from a group comprising the calibre of the product to be cooked, the size of the product to be cooked, the type of product to be cooked, the initial state of the product to be cooked, such as fresh or frozen, and/or the amount of product to be cooked in the cooking chamber, and/or at least one second parameter that is characteristic of the cooking process, in particular selected from the temperature, humidity and/or flow rate of the cooking chamber atmosphere in the cooking chamber.

3. A method according to claim 2, **characterized in that**
the first and/or second parameter(s) is/are determined using user input data and/or sensor output data.

4. A method according to claim 3, **characterized in that**
the first parameter is determined using at least two temperature values which have been sensed in the product to be cooked, in particular using the spatial distribution of the temperature within the product to be cooked.

5. A method according to any one of the preceding claims, **characterized in that** the set difference quotient, the set gradient or the set C value is determined depending on the wavelength of the microwave radiation, the penetration depth of the microwave radiation into the product to be cooked, a cooking time, a power consumption and/or a cooking quality, in particular determined by a degree of internal and external cooking.

6. A method according to any one of the preceding claims, **characterized in that** the set difference quotient is determined in such a manner that on the one hand, if the difference quotient that has been determined is smaller than the set difference quotient, an increase in microwave output leads to an increase in the difference quotient, and that on the other hand, if the difference quotient that has been determined is larger than or equal to the set difference quotient, an increase in microwave output essentially does not lead to an increase in the difference quotient, and/or
the set gradient is determined in such a manner that on the one hand, if the gradient that has been determined is smaller than the set gradient, an increase in microwave output leads to an increase in the gradient, and that on the other hand, if the gradient that has been determined is larger than or equal to the set gradient, an increase in microwave output essentially does not lead to an increase in the gradient, and/or
the set C value is determined in such a manner that on the one hand, if the C value that has been determined is smaller than the set C value, an increase in microwave output leads to an increase in the C value, and that on the other hand, if the C value that has been determined is larger than or equal to the set C value, an increase in microwave output essentially does not lead to an increase in the C value, wherein an increase in the difference quotient that has been determined, the gradient that has been determined and/or the C value that has been determined can preferably be assessed if the penetration depth of microwave radiation into the product to be cooked, the wavelength of said microwave radiation and heat diffusion within the product to be cooked are known.

7. A method according to any one of the preceding claims, **characterized in that** during the cooking process, the product to be cooked is not only heated due to microwave exposure but, at least temporarily, also by exposure to hot air and/or steam.

8. A cooking device including a cooking chamber, a microwave emission device comprising at least one microwave source, in particular a magnetron, an operating device, in particular for selecting a cooking process and/or a product to be cooked, a sensing device, in particular in the form of a temperature sensing spit, preferably including a plurality of temperature sensors, and a control or regulating device which is designed for carrying out a method according to any one of the preceding claims.

9. A cooking device according to claim 8, **characterized by** a heating device, in particular in the form of an electric or gas-fired heating device, a device for supplying humidity, in particular in the form of a steam generator and/or a water atomizer, a device for removing humidity, a device for circulating the cooking atmosphere, in particular in the form of a fan wheel and/or a pump, a heat storage device, an energy storage device, a data storage device, in particular for storing set difference quotients, set gradients and/or set C values, a reading device, in particular for the read-in of set difference quotients, set gradients and/or set C values, an output and/or display device, a connecting device, in particular to a further cooking device, a kitchen network and/or the internet, a cooling device, a cleaning device and/or at least one device for supporting the product to be cooked for holding at least one product to be cooked, each of which is preferably in effective connection with the control or regulating device.

## Revendications

1. Procédé de réglage d'une puissance de micro-ondes émise dans un espace de cuisson d'un appareil de cuisson pendant un procédé de cuisson destiné à cuire un produit à cuire en fonction d'au moins une température centrale détectée, **caractérisé par** les étapes suivantes consistant à :

a) mesurer la température centrale KT(t) au moins à deux instants $t_1$ et $t_2$ ;
b) déterminer le quotient des différences des températures centrales KT' = $\Delta KT/\Delta t$ à partir de la modification des températures centrales mesurées $\Delta KT$ = $KT(t_2)$ - $KT(t_1)$ dans l'intervalle de temps $\Delta t$ = $t_2$ - $t_1$ où de la pente de la température centrale à partir de la première dérivée de la température centrale mesurée KT(t) dans l'intervalle de temps $\Delta t$ ou
la valeur C issue de la courbe de la température centrale mesurée KT(t), à savoir

$$C_{BT}^{UF} = \int_{t_1}^{t_2} UF^{\frac{[KT(t)-BT]}{10}} dt ,$$

où
UF = facteur de conversion, et
BT = température de référence = 100°C ;
c) comparer le quotient des différences déterminé avec un quotient des différences théorique déterminé préalablement pour le produit à cuire et/ou le procédé de cuisson ou la pente déterminée avec une pente théorique déterminée préalablement pour le produit à cuire et/ou le procédé de cuisson ou la valeur C déterminée avec une valeur C théorique déterminée préalablement pour le produit à cuire et/ou le procédé de cuisson ; et
d) ajuster le réglage des micro-ondes en fonction du résultat de la comparaison ci-dessus, la puissance de micro-ondes étant augmentée lorsque le quotient des différences déterminé est inférieur au quotient des différences théorique ou la pente déterminée est inférieure à la pente théorique ou la valeur C déterminée est inférieure à la valeur C théorique, et/ou
la puissance de micro-ondes est réduite lorsque le quotient des différences déterminé est supérieur ou égal au quotient des différences théorique ou la pente déterminée est supérieure ou égale à la pente théorique ou la valeur C déterminée est supérieure ou égale à la valeur C théorique.

2. Procédé selon la revendication 1, **caractérisé en ce que** le quotient des différences théorique, la pente théorique ou la valeur C théorique est déterminé (e) en fonction d'au moins un premier paramètre caractéristique du produit à cuire, en particulier sélectionné parmi un groupe comprenant le calibre du produit à cuire, la taille du produit à cuire, le type du produit à cuire, l'état initial du produit à cuire, comme frais ou congelé, et/ou la quantité de produit à cuire dans l'espace de cuisson, et/ou au moins un second paramètre caractéristique du processus de cuisson, en particulier sélectionné parmi la température, l'humidité et/ou la vitesse d'écoulement de l'atmosphère d'espace de cuisson dans l'espace de cuisson.

3. Procédé selon la revendication 2, **caractérisé en ce que**
le ou les premier et/ou second paramètres est/sont déterminé(s) à partir des entrées d'utilisateur et/ou des données de sortie de capteur.

4. Procédé selon la revendication 3, **caractérisé en ce que**

le premier paramètre est déterminé par l'intermédiaire d'au moins deux valeurs de température détectées dans le produit à cuire, en particulier par l'intermédiaire de la répartition spatiale de la température à l'intérieur du produit à cuire.

5. Procédé selon l'une quelconque des revendications précédentes, **caractérisé en ce que** le quotient des différences théorique, la pente théorique ou la valeur C théorique est déterminée en fonction de la longueur d'onde du rayonnement micro-ondes, de la profondeur de pénétration du rayonnement micro-ondes dans le produit à cuire, d'un temps de cuisson, d'une consommation d'énergie et/ou d'une qualité de cuisson, en particulier déterminée par un degré de cuisson intérieur et extérieur.

6. Procédé selon l'une quelconque des revendications précédentes, **caractérisé en ce que** le quotient des différences théorique est déterminé de sorte que d'une part, lorsque le quotient des différences déterminé est inférieur au quotient des différences théorique, un accroissement de la puissance de micro-ondes entraîne un accroissement du quotient des différences, et d'autre part, lorsque le quotient des différences déterminé est supérieur ou égal au quotient des différences théorique, un accroissement de la puissance de micro-ondes n'entraîne essentiellement pas un accroissement du quotient des différences, et/ou la pente théorique est déterminée de sorte que d'une part, lorsque la pente déterminée est inférieure à la pente théorique, un accroissement de la puissance de micro-ondes entraîne un accroissement de la pente, et d'autre part, lorsque la pente déterminée est supérieure ou égale à la pente théorique, un accroissement de la puissance de micro-ondes n'entraîne essentiellement pas un accroissement de la pente, et/ou la valeur C théorique est déterminée de sorte que d'une part, lorsque la valeur C déterminée est inférieure à la valeur C théorique, un accroissement de la puissance de micro-ondes entraîne un accroissement de la valeur C, et d'autre part, lorsque la valeur C déterminée est supérieure ou égale à la valeur C théorique, un accroissement de la puissance de micro-ondes n'entraîne essentiellement pas un accroissement de la valeur C, un accroissement du quotient des différences déterminé, de la pente déterminée et/ou de la valeur C déterminée pouvant être de préférence estimée grâce à la connaissance de la profondeur de pénétration du rayonnement micro-ondes dans le produit à cuire en cours de cuisson, de la longueur d'onde du rayonnement micro-ondes et de la diffusion thermique dans le produit à cuire.

7. Procédé selon l'une quelconque des revendications précédentes, **caractérisé en ce que** pendant le procédé de cuisson, le produit à cuire n'est pas chauffé uniquement par une alimentation en micro-ondes, mais au moins temporairement aussi par une alimentation en air chaud et/ou en vapeur.

8. Appareil de cuisson avec un espace de cuisson, un dispositif de rayonnement micro-ondes, comprenant au moins une source de micro-ondes, en particulier un magnétron, un dispositif de commande, en particulier destiné à la sélection d'un procédé de cuisson et/ou d'un produit à cuire, un dispositif de détection, en particulier sous la forme d'une lance de détection de température pouvant être introduite dans un produit à cuire, de préférence avec une pluralité de capteurs de température, et un dispositif de commande ou de régulation qui est conçu pour mettre en oeuvre un procédé selon l'une quelconque des revendications précédentes.

9. Appareil de cuisson selon la revendication 8, **caractérisé par** un dispositif de chauffage, en particulier sous la forme d'un dispositif de chauffage fonctionnant à l'électricité ou au gaz, un dispositif d'apport d'humidité, en particulier sous la forme d'un générateur de vapeur et/ou d'un brumisateur d'eau, un dispositif d'évacuation d'humidité, un dispositif de renouvellement d'atmosphère de cuisson, en particulier sous la forme d'une roue de ventilateur et/ou d'une pompe, un dispositif de stockage de chaleur, un dispositif de stockage d'énergie, un dispositif de stockage de données, en particulier pour stocker des quotients des différences théoriques, des pentes théoriques et/ou des valeurs C théoriques, un dispositif de lecture, en particulier pour la lecture de quotients des différences théoriques, de pentes théoriques et/ou de valeurs C théoriques, un dispositif d'édition et/ou d'affichage, un dispositif de connexion, en particulier vers un autre appareil de cuisson, vers un réseau de cuisines et/ou vers l'Internet, un dispositif de refroidissement, un dispositif de nettoyage et/ou au moins un dispositif formant support de produit à cuire en vue de la réception d'au moins une pièce de produit à cuire, respectivement de préférence en liaison fonctionnelle avec le dispositif de commande ou de régulation.

Fig. 1

8

Fig. 2

# Fig. 3

100 — Start Garen nach Auswahl Garprogramm/-prozess und Beladen

102 — MW-Leistung P = 40% $P_{MAX}$

104 — KT-Messung erwünscht?

nein

106 — Regelung durch Oberflächentemperatur und/oder Quelldampfrate und/oder Feuchte

ja

108 — Messung von KT für 30 sec

110 — Ermittelung von $KT'_{ist}$

112 — $KT'_{ist} \geq KT'_{soll}$ ?

nein

114 — Erhöhe P um +5%

ja

116 — Reduziere P um -10%

118 — Sind 30 sec vergangen?

nein

ja

**EP 2 136 604 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3119496 A1
- EP 0746180 A2
- EP 0838637 A1
- DE 4217943 A1
- WO 2006045290 A1
- EP 0609762 A1
- WO 0247522 A2
- JP 2002349868 A